# EUROPÄISCHE PATENTSCHRIFT

(11) **EP 1 526 997 B1**
(45) Veröffentlichungstag und Bekanntmachung des Hinweises auf die Patenterteilung: **13.04.2011**
(21) Anmeldenummer: 03792185.5
(22) Anmeldetag: 09.07.2003
(51) Int. Cl.: B62D 5/04

(54) **KRAFTFAHRZEUGLENKUNG MIT BERLAGERUNGSLENKUNG**
MOTOR VEHICLE STEERING SYSTEM WITH SUPERIMPOSED STEERING SYSTEM
DIRECTION DE VEHICULE AUTOMOBILE COMPRENANT UNE DIRECTION A SUPERPOSITION

(30) Priorität: 07.08.2002 DE 10236261
(43) Veröffentlichungstag der Anmeldung: 04.05.2005
(73) Patentinhaber: ThyssenKrupp Presta SteerTec GmbH, 40476 Düsseldorf (DE)
(72) Erfinder: NIESSEN, Harwin, 73230 Kirchheim u. Teck (DE); VON HAMMEL, Klaus, 70619 Stuttgart (DE)
(74) Vertreter: Lenzing Gerber Stute
(86) Internationale Anmeldenummer: PCT/EP2003/007382
(87) Internationale Veröffentlichungsnummer: WO 2004/018277

(56) Entgegenhaltungen:
- EP-A1- 1 526 997
- WO-A-00/43251
- WO-A-02/02389
- DE-A- 19 755 312
- DE-A1- 3 709 590

## Beschreibung

Die vorliegende Erfindung betrifft eine Kraftfahrzeuglenkung. WO 03/053763A1 offenbart eine gattungsgemäße Überlagerungslenkung.

Aus der WO 02/02389 A1 ist ein Verfahren zum Lenken eines Fahrzeugs bekannt. Diese Lenkung weist einen ersten Antrieb für die Lenkunterstützung und einen zweiten Antrieb für das Übertragungsgetriebe des Lenkgestänges. Der zweite am Chassis des Fahrzeugs befestigte Antrieb ist über ein selbsthemmendes mechanisches Getriebe mit dem Überlagerungsgetriebe gekoppelt, wobei das Überlagerungsgetriebe auch ein Planetengetriebe sein kann.

Aus der DE 197 55 312 A1 ist eine Lenkung mit lediglich einem Stellglied bekannt. Das Stellglied dient zum überlagerten Lenkeingriff und ist mit einer Eingangswelle an das Lenkrad und mit seiner Ausgangswelle mit dem Lenkgetriebe gekoppelt. Das Stellglied ist entweder mittels eines elektrischen oder hydraulischen Aktuator angetrieben und hat keine Verbindung zum Chassis des Fahrzeugs.

Aus der DE 40 31 316 A1 ist eine Lenkung bekannt, bei der ein Überlagerungsgetriebe in der Lenksäule angeordnet ist, das abhängig von der Lenkwinkelgeschwindigkeit über einen elektrischen Antriebsmotor dem mit der Ausgangsseite des Getriebes verbundenen Lenkgetriebe und damit den gelenkten Rädern einen zusätzlichen Lenkwinkel aufprägt. So kann das Übersetzungsverhältnis der Lenkung variiert werden. Außerdem kann bei Eingriffen eines Stabilitätskontrollprogramms ein Lenkeingriff unabhängig von dem Lenkwunsch des Fahrers erfolgen.

Diese zusätzlichen Lenkeingriffe bewirken aufgrund der Verkopplung von Lenkrad und Lenkgetriebe eine zusätzliche selbständige Drehung des Lenkrades. Daher muss die Eingangsseite des Überlagerungsgetriebes während des autonomen Lenkeingriffs abgestützt werden.

Dieses unvermittelt auftretende Drehmoment ist nachteilig. Insbesondere ist das System nahezu unwirksam, wenn der Fahrer keine Hand am Lenkrad hat oder das Lenkrad beispielsweise in Geradeausfahrt nur mit sehr geringer Kraft führt. Nachteilig ist zudem das aufwendige und damit fehleranfällige Umlaufgetriebe, welches zudem einen großen Kostenfaktor darstellt.

Es ist daher Aufgabe der vorliegenden Erfindung, eine Lenkung bereitzustellen, die ohne ein Umlaufgetriebe auskommt, und die gleichzeitig die Erzeugung eines der Fahrsituation entsprechenden Handmoments möglichst einfach realisiert.

Diese Aufgabe wird erfindungsgemäß von einer Lenkung mit den Merkmalen des Anspruchs 1 gelöst. Weitere vorteilhafte Ausgestaltungen ergeben sich durch die Merkmale der Unteransprüche.

Bei der erfindungsgemäßen Kraftfahrzeuglenkung handelt es sich vom Regelungs- und Steuerungskonzept her im Prinzip um eine Steer-by-wire-Lenkung, bei der jedoch eine mechanische Kopplung zwischen dem Lenkrad und den gelenkten Rädern für den Notbetrieb, d.h. bei Ausfall des Handmomentenstellers oder des Lagereglers für die Zahnstangen- bzw. Räderverstellung vorhanden ist. Die Entkopplung zwischen Handmomentensteller und Lageregler wird vorteilhaft durch den Antrieb und das evtl. noch zwischengeschaltete Übersetzungsgetriebe realisiert. Die Regelungen bzw. Steuerungen unterhalb und oberhalb des Antriebs bzw. zwischengeschalteten Getriebes beeinflussen sich deshalb nur gering, da Bewegungen an der Eingangs- oder Ausgangswelle durch Drehung des Rotors des Antriebs ausgeglichen werden, ohne daß sich derartige Verdrehungen an der anderen Welle wesentlich bemerkbar machen.

Ein mechanischer Durchgriff als eine Rückfallebene bei einem Störzustand ist gegeben, da die Relativbewegung zwischen Rotor und Stator bzw. Gehäuse des Antriebs im Störfall durch das Schneckengetriebe sichergestellt ist. Durch Vorsehen des Schneckengetriebes wird prinzipiell keine Blockiervorrichtung benötigt, da ein Schneckengetriebe selbsthemmend sein kann. Hierdurch verfügt der Fahrer vorteilhaft bei Ausfall des Antriebes über einen mechanischen Durchgriff zum unteren Teil des Lenkgetriebes, wodurch das Fahrzeug auch im Notfall lenkbar ist. Mit Hilfe des Antriebs wird das Handmoment generiert, wobei bei Vorhandensein eines Momentensensors eine Momentenregelung vorgesehen werden kann. Der Antrieb oder ein Momentensensor zur momentengeregelten Lenksäule ist aus regelungstechnischer Sicht vorteilhaft möglichst dicht an der Lenksäule und dem Lenkrad anzuordnen. Das Teilsystem unterhalb des Antriebs bzw. Schneckengetriebes kann vorteilhaft als Lageregelung ausgelegt werden. Dabei setzt sich die Soll-Lage des Ritzels und damit auch für die Zahnstange aus der Summe zweier Größen zusammen. Dies sind zum einen der vom Fahrer am Lenkrad erzeugte Lenkwinkel ϕ_{steer, soll} sowie der vom Steuergerät vorgegebene Zusatzwinkel ϕ_{ESP}. Die Summe dieser Winkel wird dem Lageregler vorteilhaft als Referenzsignal ϕ_{pinion,ref} übergeben. Sofern ein Fahrzeugstabilitätsprogramm einen Zusatzlenkwinkel aufprägt, wird somit die Zahnstange von der LageRegelung entsprechend vom Servoantrieb verstellt. Eine Rückwirkung auf das Lenkrad kann leicht durch die prinzipielle kinematische Trennung aufgrund des angesteuerten Antriebs erfolgen. Durch entsprechende Ansteuerung bzw. Regelung des Antriebs ist es somit möglich, dass die das Fahrzeug lenkende Person den autonomen Lenkeingriff des Fahrzeugstabilitätsprogramms vorteilhaft nicht spürt. In einer besonderen Ausführungsform ist jedoch problemlos möglich, der Person insbesondere während des autonomen Lenkeingriffs des Fahrzeugstabilitätsprogramms dessen Aktivität auch über das Lenkrad mitzuteilen. Hierfür kann, ähnlich dem Vibrieren bzw. Rütteln des Bremspedals beim ansprechenden Anti-Blockier-System, dem normalen Handmoment ein zusätzliches Handmoment oder Momentenverlauf überlagert werden, wodurch z.B. ein Vibrieren am Lenkrad zu spüren ist.

Aufgrund der Anordnung des Antriebs im Lenkgestänge, muss dieser nicht mehr mit dem Chassis des Fahrzeugs verbunden werden, wodurch sich eine platzsparende kleine Bauweise ergibt. Die erfindungsgemäße Lenkung besteht vorteilhaft aus wenigen Teilen, wodurch sie kostengünstig und weniger fehleranfällig ist.

Wenn das vom Motor aufgebrachte Moment ausreichend genau bekannt ist, ist es auch möglich auf den Momentensensor im Lenkgestänge zu verzichten. Liegt das Motormoment z.B. in Form des Motorstroms vor, so entspricht das Lenkmoment im stationären reibungsfreien Zustand dem des Motormoments multipliziert mit der Getriebeübersetzung. Trägheitseinflüsse können aufgrund der bekannten Drehgeschwindigkeiten bzw. Beschleunigungen vorteilhaft kompensiert werden.

Nachfolgend werden anhand von Figuren mögliche Ausführungsformen erfindungsgemäßer Kraftfahrzeuglenkungen näher erläutert.

Es zeigen:
- Fig. 1 und 2:: zwei verschiedene Ausführungsformen einer erfindungsgemäßen Kraftfahrzeuglenkung in einer schematischen Darstellung;
- Fig. 3:: eine Kraftfahrzeuglenkung gemäß Figur 1 mit zugehörigem Regelungskonzept.

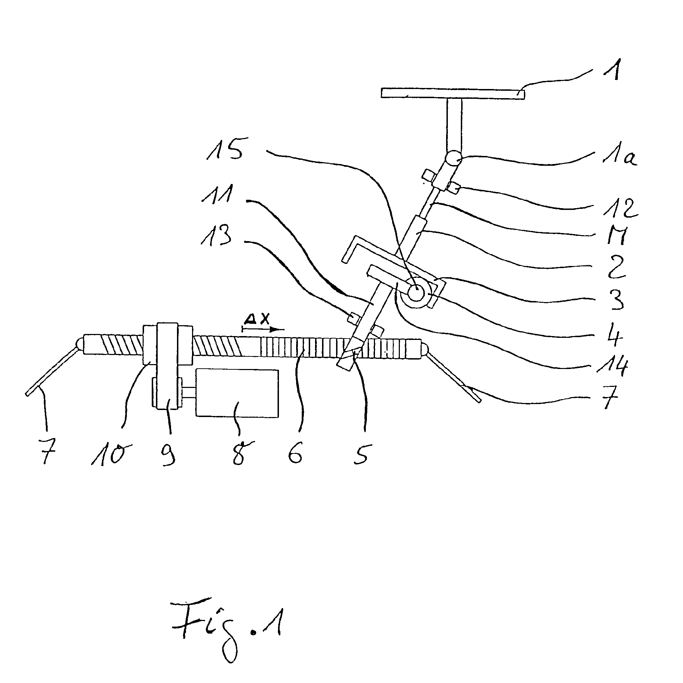

In der Figur 1 ist eine erfindungsgemäße Kraftfahrzeuglenkung schematisch veranschaulicht. Die Lenkung weist ein Lenkrad 1 auf, das drehfest z. B. über ein Kardangelenk 1a mit einem Drehmomentensensor M in Verbindung ist.

Der Drehmomentensensor M kann z.B. ein Drehstab sein, welcher in die Lenksäule 2 integriert ist. Die Lenksäule ist wiederum mit einem topfförmigen Teil 3 fest verbunden. Im topfförmigen Teil 3 ist ein Antrieb 15 angeordnet, der mit seiner Statorseite bzw. mit seinem Gehäuse am topfförmigen Teil 3 befestigt ist. Der Antrieb 15 treibt mit seinem Rotor eine Schnecke 14 an, die mit einem Schraubrad bzw. Zahnrad 14 zusammenwirkt und ein Schneckengetriebe bildet. Das Zahnrad 14 ist am oberen Ende einer Welle 11 angeordnet, wobei ein Ritzel 5 am unteren Ende der Welle 11 angeordnet ist, welches mit wiederum in an sich bekannter Weise mit einer Zahnstange 6 kämmt, die im Bereich der gelenkten Achse eines Kraftfahrzeuges über Spurstangen 7 bei Drehung des Lenkritzels 5 eine Radwinkeländerung der gelenkten Räder bewirkt. Ein elektrischer Servoantrieb 8 ist der Zahnstange 6 zugeordnet und wirkt über ein Ritzel und einen Zahnriemen 9 auf einen Kugelumlauf 10, der mit einem daran angepassten Gewinde in Eingriff steht, so dass eine Drehung des Kugelumlaufs 10 ebenfalls eine Verlagerung Δx der Zahnstange 6 und damit eine Radwinkeländerung bewirkt. Die Momentenabstützung des Antriebs 15 erfolgt lediglich über die Lenksäule 2 und das Ritzel 5. D.h. eine Abstützung zum Chassis bzw. Lenkgehäuse findet nicht statt, so dass der Antrieb 15 um die Lenksäule 2 rotiert. Es kann zudem eine Getriebestufe eingesetzt werden, so dass der Antrieb 15 entsprechend den notwendigen Leistungen ausgelegt werden kann. Typischerweise sind hierfür Untersetzungsgetriebe vorzusehen, da die notwendigen Geschwindigkeiten klein und die erforderlichen Momente verhältnismäßig groß sind.

Ein an der Lenksäule 2 angeordneter Winkelsensor 12 ermittelt die Stellung des Lenkrads 1 und erzeugt ein entsprechendes Signal, welches wie in Fig. 5 dargestellt dem Lageregler 22 zur Verstellung der Zahnstange 6, sowie dem Momentenregler 21 zur Einregelung des Handmoments zugeführt wird. In der Lenksäule 2 ist zudem ein Momentensensor M angeordnet, der das am Lenkrad 1 angreifende Handmoment ermittelt. Die Signale des Momentensensors M stellen ebenfalls eine Eingangsgröße des Momentenreglers 21 dar. Sofern statt einer Momentenregelung eine Momentensteuerung eingesetzt wird, kann der Momentensensor M entfallen.

Damit ein mechanischer Durchgriff im Störungsfall vom Lenkrad 1 hin zum Lenkritzel 5 möglich ist, können die Wellen 2 und 11 mittels einer nicht dargestellten Blockiervorrichtung miteinander arretiert werden. Eine derartige Blockiervorrichtung ist jedoch bei der Ausführungsform gem. der Fig. 1 nicht unbedingt notwendig, wenn das durch die Schnecke 4 und das Zahnrad 14 gebildete Schneckengetriebe selbsthemmend ist.

Zwischen Lenkritzel 5 und Welle 11 kann zur besseren Entkopplung von Lage-Regler 22 und Momentenregler 21 ein Dämpfungsglied angeordnet werden.

Je nach Regelungskonzept und Vorhandensein eines Momentensensors wird das Handmoment entweder gesteuert (kein Momentensensor vorhanden) oder eingeregelt (Momentensensor vorhanden). Zur Momentenregelung ist das Messen mindestens eines Moments im Strang zwischen dem Ritzel und dem Lenkrad notwendig.

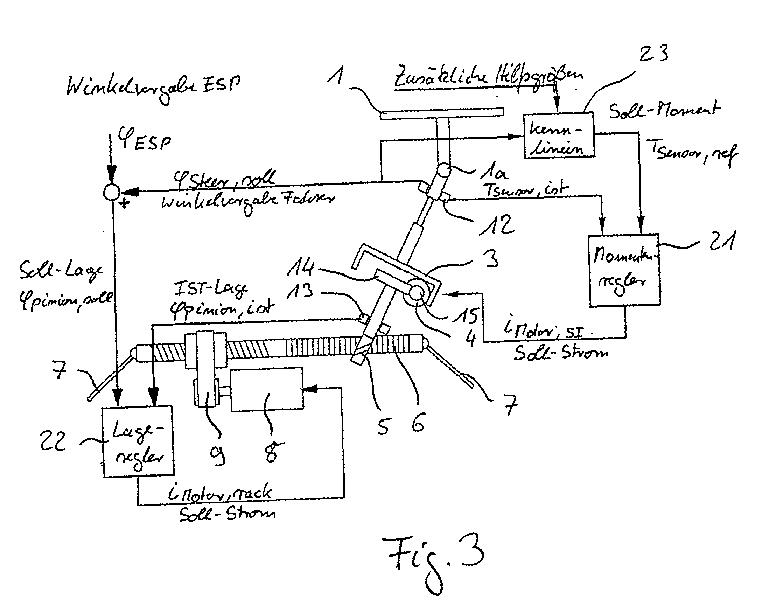

Wie in Fig. 3 dargestellt, wird die Verdrehung des Lenkrads 1 mittels des Winkelsensors 12 ermittelt, der die Sollgröße ϕ_{steer,soll} erzeugt. Diese Sollgröße ist gleichzeitig Eingangsgröße für das Kennlinienfeld 23. Eventuell dienen zusätzliche Hilfsgrößen, wie z.B. die Fahrzeuggeschwindigkeit, als zusätzliche Eingangsgrößen für das Kennlinienfeld 23, mittels dem das Referenzsignal T_{sensor,ref} (Soll-Moment) erzeugt wird und die Eingangsgröße für die Momentensteuerung 21, die die Regelgröße i_{Motor,SI} für den Antriebe 8 erzeugt.

Durch den Antrieb 15 erfolgt regelungstechnisch eine Trennung zwischen der Handmomentenregelung und der Lageregelung der Lenkstange 6. Die Zahnstange 6 ist über die Spurstangen 7 mit den gelenkten Rädern (nicht dargestellt) verbunden, wodurch die Verstellung der Zahnstange 9 zu einer Verstellung der gelenkten Räder führt. Der Sollgröße ϕ_{steer,soll} wird der Zusatzwinkel ϕ_{ESP}, welcher vom elektronischen Stabilitätsprogramm vorgegeben wird, aufgeschaltet. Die Summe dieser beiden Winkelgrößen ist eine Eingangsgröße ϕ_{pinion, ref} des Lagereglers 22. Eine weitere Eingangsgröße des Lagereglers 22 ist entweder die Stellung des Ritzels 5 oder die Stellung der Zahnstange 6. In der Figur 5 wird die Winkelstellung des Ritzels 5 mittels des Winkelsensors 13 gemessen, wobei der Winkelsensor 13 das Ist-Signal ϕ_{Pinion,ist} an den Lagerregler 22 weitergibt. Der Lageregler 22 erzeugt den Sollstrom i_{motor,rack,} der zur Steuerung des Rack-Motors 8 dient.

Die in Figur 3 dargestellte Momentenregelung weist als Eingangsgröße das am Lenkrad 1 anliegende Handmoment auf, welches mittels des Momentensensors M, welcher das Signal T_{sensor,ist} erzeugt, auf. Der Momentensensor M kann an beliebiger Stelle in der Lenkung oberhalb des Antriebs 15 angeordnet sein. Es ist jedoch sinnvoll den Sensor M möglichst dicht am Lenkrad 1 anzuordnen, damit der Momentenregler 21 möglichst einfach realisiert werden kann. Mittels der Momentenregelung ist es prinzipiell möglich, das Handmoment auf Null einzuregeln, um danach das gewünschte Handmoment aufzuschalten.

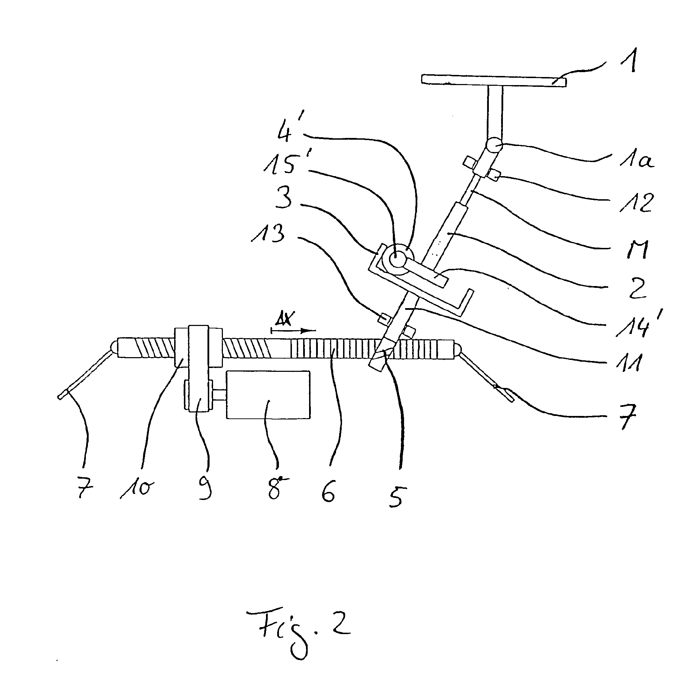

Die Figur 2 zeigt eine zweite alternative Ausführungsform, bei der im Unterschied zur Ausführungsform gem. der Figur 1 der Antrieb 15' an der Welle 11 statorseitig befestigt ist, und der Rotor des Antriebs 15' über die auf der Welle des Rotors sitzende Schnecke 4' das an der Lenksäule 2 befestigte Zahnrad 14' kämmt.

Bei den vorbeschriebenen Ausführungsbeispielen kann noch eine z.B. elektrisch betätigbare Bremse vorgesehen werden. Der Vorteil hierbei besteht darin, dass bei der Auslegung des Getriebes dessen Übersetzung dann freier definiert werden kann.

Es versteht sich von selbst, dass das in Figur 3 dargestellte Regelungskonzept auch für die in Figur 2 dargestellte Ausführungsvariante verwendbar ist. Auch versteht es sich von selbst, dass der elektrische Antrieb 8 durch einen hydraulischen Antrieb ersetzbar ist.

## Patentansprüche

1. Kraftfahrzeuglenkung mit folgenden Elementen:
- einem Lenkrad (1), das drehfest mit einer Lenksäule 2) verbunden ist;
- einem Lenkritzel (5), das mit einer Zahnstange (6) kämmt;
- einem zwischen Lenkrad (1) und Lenkritzel (5) angeordneten Getriebe (4, 14);
- einem ersten Antrieb (15, 15'), welcher auf das Getriebe (4, 14) zur Einstellung eines Handmomentes wirkt;
- einem weiteren elektromagnetischen oder hydraulisch arbeitenden Antrieb (8), der von einer elektronischen Steuerung (22) angesteuert wird und der auf die Zahnstange (6) zur Verstellung der Fahrzeugräder wirkt, und
- einem Winkelsensor (12) zur Erfassung der Stellung der Lenksäule (2) bzw. des Lenkrads (1) und Generierung eines entsprechenden Signals;
- wobei das Signal des Winkelsensors (12) zur Erfassung der Stellung der Lenksäule (2) bzw, des Lenkrads (1) ein Eingangssignal für die Steuerung ist,
**dadurch gekennzeichnet, dass** das Getriebe (4, 14) ein Schneckengetriebe ist, wobei die Momentenabstützung des Antriebs (15, 15') lediglich über die Lenksäule (2) und das Ritzel (5) erfolgt, wozu der Antrieb (15) mit seinem Rotor eine Schnecke (4) antreibt, die mit einem Zahnrad oder Schraubrad (14) zusammenwirkt, wobei entweder
- das Zahnrad oder Schraubrad (14) an einer das Ritzel (5)
antreibenden Welle (11) angeordnet ist und der Antrieb (15) statorseitig mit seinem Gehäuse direkt oder über mindestens ein Zwischenteil (3) mit
der lenkradseitigen Lenksäule (2) verbunden ist,
oder
- das Zahnrad oder Schraubrad (14) an der Lenksäule (2)
angeordnet ist und der Antrieb (15') statorseitig mit
seinem Gehäuse direkt oder über mindestens ein Zwischenteil (3) mit der das Ritzel (5) treibenden Welle
(11) ***drehfest*** verbunden ist.

2. Kraftfahrzeuglenkung nach Anspruch 1, **dadurch gekennzeichnet, dass** eine Steuerung (21, 23) den Antrieb (3) derart ansteuert, dass sich ein der Fahrsituation entsprechendes Handmoment zur Erzielung eines bestimmten Fahrgefühls beim Fahrer am Lenkrad (1) einstellt.

3. Kraftfahrzeuglenkung nach einem der vorherigen Ansprüche, **dadurch gekennzeichnet, dass** das Schneckengetriebe (4, 14) selbsthemmend ist.

4. Kraftfahrzeuglenkung nach einem der vorhergehenden Ansprüche, **dadurch gekennzeichnet, dass** ein Momentensensor (M) das am Lenkrad (1) angreifende Handmoment erfasst und ein entsprechendes Signal erzeugt.

5. Kraftfahrzeuglenkung nach einem der vorhergehenden Ansprüche, **dadurch gekennzeichnet, dass** eine Momentenregelung (21, 23) anhand des Signals des Winkelsensors (12) und/oder des Signals des Momentensensors (M) den Antrieb (**8**) ansteuert.

6. Kraftfahrzeuglenkung nach Anspruch 5, **dadurch gekennzeichnet , dass** weitere Zustandsgrößen des Fahrzeugs Eingangsgrößen für die Momentenregelung (21, 23) bilden.

7. Kraftfahrzeuglenkung nach einem der vorhergehenden Ansprüche, **dadurch gekennzeichnet , dass** anstelle des einen Antriebs (15; 15') zwei Antriebe die Momentenübertragung zwischen Lenksäule (2) und Lenkritzel (5) generieren und bei Ausfall eines der beiden Antreibe der noch funktionierende Antrieb das zu generierende Moment allein generiert.

## Claims

1. Motor vehicle steering system having the following elements:
- a steering wheel (1) that is connected in a rotationally fixed manner to a steering column (2);
- a steering pinion (5) that meshes with a gear rack (6);
- a gear unit (4, 14) disposed between steering wheel (1) and steering pinion (5);
- a first drive (15, 15') that acts upon the gear unit (4, 14) in order to adjust a manual torque;
- a further electromagnetic or hydraulically operating drive (8) that is controlled by an electronic controller (22) and acts upon the gear rack (6) in order to displace the vehicle wheels, and
- an angle sensor (12) for detecting the position of the steering column (2) and/or of the steering wheel (1) and generating a corresponding signal;
- wherein the signal of the angle sensor (12) for detecting the position of the steering column (2) and/or of the steering wheel (1) is an input signal for the controller,
**characterized in that** the gear unit (4, 14) is a worm gear, wherein the torque support of the drive (15, 15') is effected merely via the steering column (2) and the pinion (5), for which purpose the drive (15) with its rotor drives a worm (4) that interacts with a gearwheel or helical gear (14), wherein either
- the gearwheel or helical gear (14) is disposed on a shaft (11) that drives the pinion (5) and the drive (15) at the stator side is connected by its housing directly or via at least one intermediate part (3) to the steering-wheel-side steering column (2), or
- the gearwheel or helical gear (14) is disposed on the steering column (2) and the drive (15') at the stator side is connected ***in a rotationally fixed manner*** by its housing directly or via at least one intermediate part (3) to the shaft (11) that drives the pinion (5).

2. Motor vehicle steering system according to claim 1, **characterized in that** a controller (21, 23) controls the drive (3) in such a way that a manual torque corresponding to the driving situation arises in order to achieve a specific driving sensation in the driver at the steering wheel (1).

3. Motor vehicle steering system according to one of the preceding claims, **characterized in that** the worm gear (4, 14) is self-locking.

4. Motor vehicle steering system according to one of the preceding claims, **characterized in that** a torque sensor (M) detects the manual torque acting upon the steering wheel (1) and generates a corresponding signal.

5. Motor vehicle steering system according to one of the preceding claims, **characterized in that** a torque regulating device (21, 23) controls the drive (8) on the basis of the signal of the angle sensor (12) and/or the signal of the torque sensor (M).

6. Motor vehicle steering system according to claim 5, **characterized in that** further state variables of the vehicle form input variables for the torque regulating device (21, 23).

7. Motor vehicle steering system according to one of the preceding claims, **characterized in that** instead of the one drive (15; 15') two drives generate the torque transmission between steering column (2) and steering pinion (5) and in the event of failure of one of the two drives the drive still functioning exclusively generates the torque to be generated.

## Revendications

1. Système de direction pour véhicule automobile, comprenant les éléments suivantes :
- un volant de direction (1) qui est lié de manière fixe en rotation à une colonne de direction (2) ;
- un pignon de direction (5) qui engrène avec une crémaillère (6) ;
- une transmission (4, 14) agencée entre le volant de direction (1) et le pignon de direction (5) ;
- un premier moyen d'entraînement (15, 15'), qui agit sur la transmission (4, 14) pour régler un moment manuel ;
- un autre moyen d'entraînement (8) électromagnétique fonctionnant par voie hydraulique, qui est commandé par un système de commande électronique (22) et agit sur la crémaillère (6) pour le déplacement des roues du véhicule, et
- un capteur angulaire (12) destiné à relever la position de la colonne de direction (2) respectivement du volant de direction (1), et à engendrer un signal correspondant, le signal du capteur angulaire (12) destiné à relever la position de la colonne de direction (2) respectivement du volant de direction (1), étant un signal d'entrée pour le système de commande,
**caractérisé en ce que** la transmission (4, 14) est une transmission à vis sans fin, la reprise de moments du moyen d'entraînement (15, 15') s'effectuant uniquement par l'intermédiaire de la colonne de direction (2) et du pignon (5), ce pour quoi le moyen d'entraînement (15) entraîne, avec son rotor, une vis sans fin (4) qui interagit avec une roue dentée ou une roue hélicoïdale (14), la configuration étant telle que
- soit la roue dentée ou roue hélicoïdale (14) est agencée sur un arbre (11) entraînant le pignon (5), et le moyen d'entraînement (15) est relié, côté stator, par son carter, directement ou moyennant au moins une pièce intermédiaire (3), à la colonne de direction (2) côté volant de direction,
- soit la roue dentée ou roue hélicoïdale (14) est agencée sur la colonne de direction (2), et le moyen d'entraînement (15') est relié de manière fixe en rotation, côté stator, par son carter, directement ou moyennant au moins une pièce intermédiaire (3), à l'arbre (11) entraînant le pignon (5).

2. Système de direction pour véhicule automobile selon la revendication 1, **caractérisé en ce qu'**un système de commande (21, 23) commande le moyen d'entraînement (3) de façon telle qu'il s'établisse un moment manuel correspondant à la situation de marche du véhicule, en vue d'obtenir une sensation de conduite déterminée pour le conducteur, au niveau du volant de direction (1).

3. Système de direction pour véhicule automobile selon l'une des revendications précédentes, **caractérisé en ce que** la transmission à vis sans fin (4, 14) est autobloquante.

4. Système de direction pour véhicule automobile selon l'une des revendications précédentes, **caractérisé en ce qu'**un capteur de moment (M) relève le moment manuel appliqué au volant de direction (1) et engendre un signal correspondant.

5. Système de direction pour véhicule automobile selon l'une des revendications précédentes, **caractérisé en ce qu'**un système de régulation de moment (21, 23) commande le moyen d'entraînement (8) au regard du signal du capteur angulaire (12) et/ou du signal du capteur de moment (M).

6. Système de direction pour véhicule automobile selon la revendication 5, **caractérisé en ce que** d'autres grandeurs d'état du véhicule constituent des grandeurs d'entrée pour le système de régulation de moment (21, 23).

7. Système de direction pour véhicule automobile selon l'une des revendications précédentes, **caractérisé en ce qu'**à la place du moyen d'entraînement (15, 15'), deux moyens d'entraînement engendrent la transmission de moment entre la colonne de direction (2) et le pignon de direction (5), et, en cas de défaillance de l'un des deux moyens d'entraînement, le moyen d'entraînement qui fonctionne encore, engendre à lui seul le moment à engendrer.
